(19) Europäisches Patentamt
European Patent Office
Office européen des brevets

(11) EP 4 708 440 A1

(12) **EUROPEAN PATENT APPLICATION**

(43) Date of publication:
**11.03.2026 Bulletin 2026/11**

(21) Application number: **25199469.5**

(22) Date of filing: **01.09.2025**

(51) International Patent Classification (IPC):
***H01M 10/0567*** *(2010.01)*

(52) Cooperative Patent Classification (CPC):
**H01M 10/0567;** H01M 2300/004; H01M 2300/0042; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.08.2024 CN 202411214879**

(71) Applicant: **Ningde Amperex Technology Limited**
**Ningde City, Fujian Province 352100 (CN)**

(72) Inventors:
- **GAO, Zhiyi**
  **Ningde City, Fujian Province 352100 (CN)**
- **JIAN, Junhua**
  **Ningde City, Fujian Province 352100 (CN)**
- **LIU, Jianyu**
  **Ningde City, Fujian Province 352100 (CN)**
- **TANG, Chao**
  **Ningde City, Fujian Province 352100 (CN)**

(74) Representative: **Icosa**
**83 avenue Denfert-Rochereau**
**75014 Paris (FR)**

(54) **ELECTROLYTE, ELECTROCHEMICAL APPARATUS, AND ELECTRONIC DEVICE**

(57) An electrolyte includes a compound of formula I

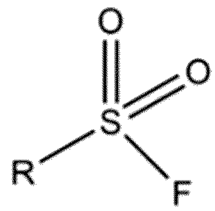

and a compound of formula II

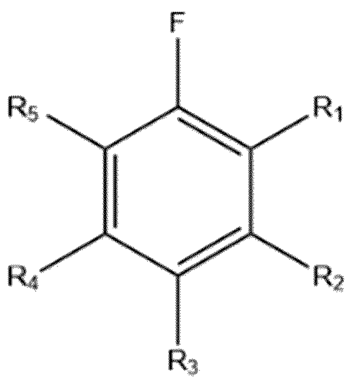

Based on a mass of the electrolyte, a mass percentage A of the compound of formula I satisfies 0.01% ≤ A ≤ 70%, and a mass percentage B of the compound of formula II satisfies 2.0% ≤ B ≤ 20%.

EP 4 708 440 A1

## Description

### TECHNICAL FIELD

The present application relates to the technical field of electrochemical apparatus, and in particular, to an electrolyte, an electrochemical apparatus, and an electronic device.

### BACKGROUND

Electrochemical apparatuses (for example, lithium-ion batteries) have advantages such as high energy storage density, high open-circuit voltage, low self-discharge rate, long cycle life, and good safety, and are widely used in various fields such as portable energy storage, electronic devices, and electric vehicles. However, higher requirements are also imposed on the comprehensive performance of electrochemical apparatus, for example, the need to develop an electrolyte capable of concurrently improving a high-temperature cycling capacity retention rate and a low-temperature high-rate discharge capacity retention rate of the electrochemical apparatus.

### SUMMARY

Embodiments of the present application provide an electrolyte, an electrochemical apparatus, and an electronic device. By improving components of the electrolyte, an electrolyte capable of concurrently improving high-temperature cycle performance and low-temperature high-rate discharge performance of the electrochemical apparatus is obtained.

According to a first aspect, the present application provides an electrolyte including a compound of formula I and a compound of formula II;

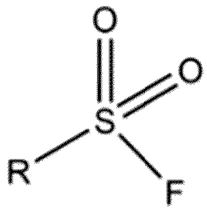

formula I

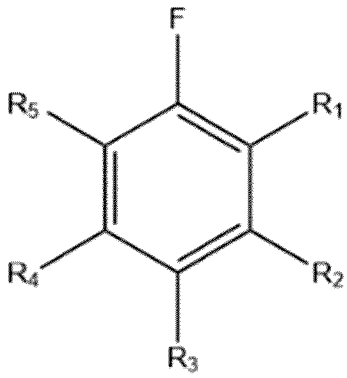

formula II

where in formula I, R is selected from any one of an unsubstituted or $R_0$-substituted $C_2$-$C_6$ alkyl, an unsubstituted or $R_0$-substituted $C_2$-$C_6$ alkenyl, an unsubstituted or $R_0$-substituted $C_2$-$C_6$ alkynyl, an unsubstituted or $R_0$-substituted $C_3$-$C_6$ nitrogen-containing heteroaryl, or an unsubstituted or $R_0$-substituted $C_6$-$C_{12}$ aryl, a substituent $R_0$ of each group is independently selected from any one of an unsubstituted or substituted $C_1$-$C_6$ alkyl, and during substitution, a substituent is fluorine;

in formula II, $R_1$ to $R_5$ are each independently selected from any one of fluorine, an unsubstituted or substituted $C_1$-$C_5$ alkyl, an unsubstituted or substituted $C_1$-$C_5$ phosphate group, an unsubstituted or substituted $C_1$-$C_5$ sulfonate group, or an unsubstituted or substituted $C_1$-$C_5$ ester group, and during substitution, a substituent is fluorine; and

based on a mass of the electrolyte, a mass percentage of the compound of formula I is A, and a mass percentage of the compound of formula II is B, where $0.01\% \leq A \leq 70\%$, and $2.0\% \leq B \leq 20\%$. By including the compound of formula I and the compound of formula II in the electrolyte, where the compound of formula I and the compound of formula II are within the ranges of the present application, the compound of formula I improves a low-temperature high-rate discharge capacity retention rate of the electrochemical apparatus, while the compound of formula II concurrently improves stability of a positive electrode and a negative electrode, thereby improving a high-temperature cycling capacity retention rate of the electrochemical apparatus.

In some embodiments, $0.17 \leq A/B \leq 18$. By selecting the mass percentages of the compound of formula I and the compound of formula II in the electrolyte to satisfy the above range, the compound of formula I and the compound of

formula II can better cooperate to improve positive electrode impedance and interface stability of the positive electrode and the negative electrode, thereby concurrently improving a low-temperature high-rate discharge capacity retention rate and a high-temperature cycling capacity retention rate of the electrochemical apparatus.

In some embodiments, the electrolyte satisfies at least one of the following conditions:

$$(1)\ 0.5\% \leq A \leq 50\%;$$

or

$$(2)\ 4\% \leq B \leq 8\%.$$

In some embodiments, the compound of formula I includes at least one of the following compounds:

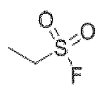
formula I-1
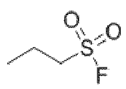
formula I-2
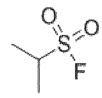
formula I-3
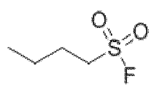
formula I-4
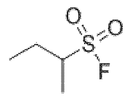
formula I-5
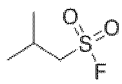
formula I-6
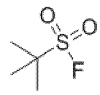
formula I-7
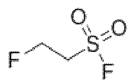
formula I-8
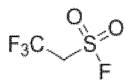
formula I-9
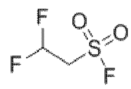
formula I-10
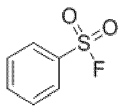
formula I-11
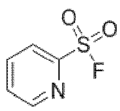
formula I-12
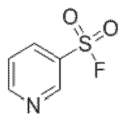
formula I-13
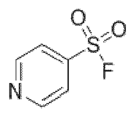
formula I-14
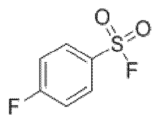
formula I-15
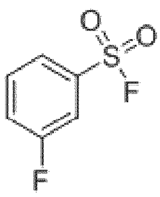
formula I-16
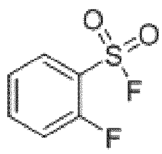
formula I-17
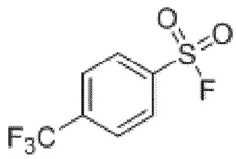
formula I-18
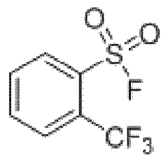
formula I-19
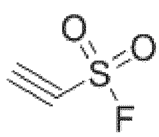
formula I-20
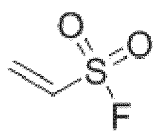
formula I-21.

By selecting the above compound of formula I, the compound of formula I can form a positive electrode interface passivation layer of a lithium-containing inorganic compound rich in S and F elements at a positive electrode interface, further reducing the positive electrode side impedance, thereby improving a low-temperature high-rate discharge capacity retention rate of the electrochemical apparatus.

In some embodiments, the compound of formula II includes at least one of the following compounds:

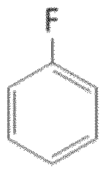
formula II-1

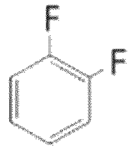
formula II-2

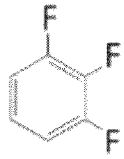
formula II-3

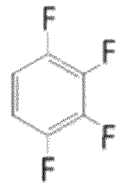
formula II-4

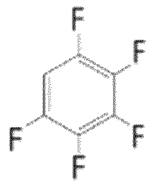
formula II-5

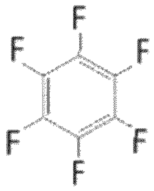
formula II-6

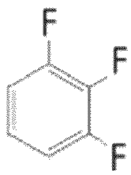
formula II-7

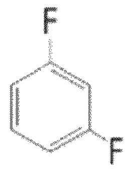
formula II-8

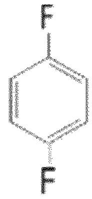
formula II-9

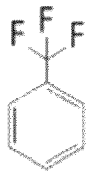
formula II-10

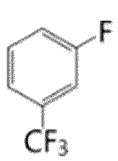
formula II-11

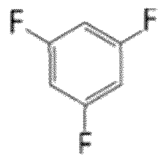
formula II-12

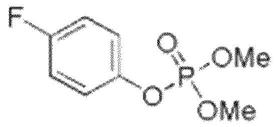
formula II-13

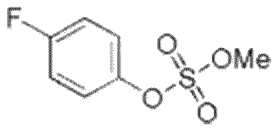
formula II-14

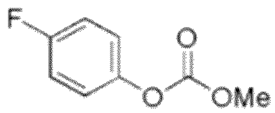
formula II-15.

By selecting the above compound of formula II, the compound of formula II has good oxidation resistance, can further improve an overall oxidation resistance of the electrolyte, suppress a situation where the compound of formula I accelerates oxidative decomposition of components in the electrolyte to generate HF, protect the positive electrode, and improve a high-temperature cycling capacity retention rate of the electrochemical apparatus.

In some embodiments, the electrolyte further includes a first component. The first component includes at least one of difluoroethylene carbonate, propylene carbonate, or vinylene carbonate; and based on the mass of the electrolyte, a mass percentage of the first component is C, where $0.8 \leq C/(A+B) \leq 1.15$. By adjusting the mass percentage of the first component, the mass percentage of the compound of formula I, and the mass percentage of the compound of formula II in the electrolyte to satisfy a range of the above conditional expression, a viscosity of the electrolyte can be further improved, and an ionic conductivity of the electrolyte can be enhanced, thereby contributing to improving kinetic performance of the electrochemical apparatus.

In some embodiments, the electrolyte further includes a second component. The second component includes at least one of diethyl carbonate, propyl propionate, or ethyl propionate; and based on the mass of the electrolyte, a mass percentage of the second component is D, where $0.9 \leq D/(A+B) \leq 2$. Both the compound of formula I and the compound of formula II have good dissociation ability for lithium salts, and when used in combination with the second component, can compensate for a deficiency in a dissociation ability of the second component for lithium salts, enhance a conductivity of the electrolyte, and contribute to further improving a high-temperature cycling capacity retention rate and a low-temperature high-rate discharge capacity retention rate of the electrochemical apparatus.

In some embodiments, the electrolyte further includes a nitrile compound. The nitrile compound includes at least one of a dinitrile compound or a trinitrile compound; and based on the mass of the electrolyte, a mass percentage of the nitrile compound is E, where $2\% \leq E \leq 10\%$. By ensuring that a mass percentage of the nitrile compound in the electrolyte satisfies the above range, the nitrile compound can synergistically act with the compound of formula I to form a positive electrode interface passivation layer rich in LiF and cyano groups, improve positive electrode interface stability, and further enhance an oxidation resistance of the electrolyte, thereby further improving high-temperature storage performance of the

electrochemical apparatus.

In some embodiments, the dinitrile compound includes at least one of adiponitrile, succinonitrile, glutaronitrile, or 1,4-dicyano-2-butene; and the trinitrile compound includes at least one of 1,3,6-hexanetricarbonitrile or 1,3,5-pentanetricarbonitrile.

According to a second aspect, the present application provides an electrochemical apparatus including the electrolyte as described above.

According to a third aspect, the present application provides an electronic device including the electrochemical apparatus as described above.

Based on the electrolyte, the electrochemical apparatus, and the electronic device of some embodiments of the present application, by including the compound of formula I and the compound of formula II in the electrolyte, and ensuring that the mass percentage A of the compound of formula I satisfies $0.01\% \leq A \leq 70\%$, and the mass percentage B of the compound of formula II satisfies $2.0\% \leq B \leq 20\%$, the compound of formula I can form a positive electrode interface passivation layer of a lithium-containing inorganic compound rich in S and F elements at a positive electrode interface, reducing the positive electrode side impedance, thereby improving a low-temperature high-rate discharge capacity retention rate of the electrochemical apparatus. The compound of formula II has good oxidation resistance, and an addition of the compound of formula II can enhance an overall oxidation resistance of the electrolyte, and prevent the compound of formula I from accelerating oxidative decomposition of components in the electrolyte to generate HF, thereby preventing damage to the positive electrode by HF, improving positive electrode stability. Meanwhile, the compound of formula II can preferentially adsorb on a negative electrode to form a protective film, improving negative electrode stability. Therefore, while adding the compound of formula I to the electrolyte improves a low-temperature high-rate discharge capacity retention rate of the electrochemical apparatus, the compound of formula II can concurrently improve stability of the positive electrode and the negative electrode, thereby improving a high-temperature cycling capacity retention rate of the electrochemical apparatus.

## DETAILED DESCRIPTION

Technical solutions in embodiments of the present application are clearly and completely described below. Apparently, the described embodiments are only some embodiments of the present application, rather than all embodiments. All other embodiments obtained by persons skilled in the art based on the present application shall fall within the protection scope of the present application.

The present application provides an electrolyte, the electrolyte including a compound of formula I and a compound of formula II. Based on a mass of the electrolyte, a mass percentage of the compound of formula I is A, and a mass percentage of the compound of formula II is B, where $0.01\% \leq A \leq 70\%$, and $2.0\% \leq B \leq 20\%$. By configuring the electrolyte as described above, the present application can concurrently improve a low-temperature high-rate discharge capacity retention rate and a high-temperature cycling capacity retention rate of an electrochemical apparatus.

The electrolyte includes the compound of formula I, and the compound of formula I is as follows:

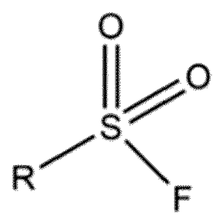

formula I;

where in formula I, R is selected from any one of an unsubstituted or $R_0$-substituted $C_2$-$C_6$ alkyl, an unsubstituted or $R_0$-substituted $C_2$-$C_6$ alkenyl, an unsubstituted or $R_0$-substituted $C_2$-$C_6$ alkynyl, an unsubstituted or $R_0$-substituted $C_3$-$C_6$ nitrogen-containing heteroaryl, or an unsubstituted or $R_0$-substituted $C_6$-$C_{12}$ aryl, a substituent $R_0$ of each group is independently selected from any one of an unsubstituted or substituted $C_1$-$C_6$ alkyl, and during substitution, a substituent is fluorine.

Based on a mass of the electrolyte, a mass percentage of the compound of formula I is A, $0.01\% \leq A \leq 70\%$. In some embodiments, $0.5\% \leq A \leq 50\%$. In some embodiments, $1\% \leq A \leq 30\%$. In some embodiments, $3\% \leq A \leq 20\%$. In some embodiments, $5\% \leq A \leq 15\%$. In some embodiments, a value of A is 0.01%, 2.0%, 6.0%, 16.0%, 35.0%, 40.0%, 45.0%, 55.0%, 60.0%, 70.0%, or a value within a range composed of any two of these values.

The electrolyte further includes the compound of formula II, and the compound of formula II is as follows:

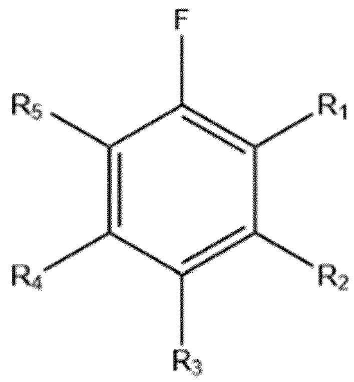

formula II;

where in formula II, $R_1$ to $R_5$ are each independently selected from any one of fluorine, an unsubstituted or substituted $C_1$-$C_5$ alkyl, an unsubstituted or substituted $C_1$-$C_5$ phosphate group, an unsubstituted or substituted $C_1$-$C_5$ sulfonate group, or an unsubstituted or substituted $C_1$-$C_5$ ester group, and during substitution, a substituent is fluorine.

Based on the mass of the electrolyte, a mass percentage of the compound of formula II is B, where B satisfies 2.0% ≤ B ≤ 20%. In some embodiments, 3.0% ≤ B ≤ 18.0%. In some embodiments, 4.0% ≤ B ≤ 8.0%. In some embodiments, 5.0% ≤ B ≤ 12.0%. In some embodiments, 5.0% ≤ B ≤ 10.0%. In some embodiments, a value of B is 2.0%, 5.5%, 6.8%, 9.8%, 11.0%, 13.4%, 14.5%, 15.0%, 18.0%, 20.0%, or a value within a range composed of any two of these values.

In the present application, by adding the compound of formula I to the electrolyte, the compound of formula I can form a positive electrode interface passivation layer of a lithium-containing inorganic compound rich in S and F elements at a positive electrode interface, reducing positive electrode side impedance, thereby improving a low-temperature high-rate discharge capacity retention rate of the electrochemical apparatus. The compound of formula II has good oxidation resistance, and an addition of the compound of formula II can enhance an overall oxidation resistance of the electrolyte, preventing oxidative decomposition of components in the electrolyte to generate HF, thereby preventing damage to the positive electrode by HF and improving positive electrode stability. For example, to improve a viscosity of the electrolyte and enhance kinetic performance of the electrochemical apparatus, in the related technologies, carbonate compounds and carboxylate compounds are added to the electrolyte. However, in a fully charged state or high-temperature storage state of the electrochemical apparatus, the compound of formula I accelerates oxidative decomposition reactions of carbonate compounds and carboxylate compounds with fluorine-containing compounds in the electrolyte to generate HF, and the HF damages a positive electrode structure, leading to deterioration of positive electrode impedance. Meanwhile, the compound of formula II can preferentially adsorb on a negative electrode to form a protective film, improving negative electrode stability. Therefore, while adding the compound of formula I to the electrolyte improves a low-temperature high-rate discharge capacity retention rate of the electrochemical apparatus, the compound of formula II can improve stability of the positive electrode and the negative electrode, thereby concurrently improving a high-temperature cycling capacity retention rate of the electrochemical apparatus. When a mass percentage A of the compound of formula I exceeds an upper limit of 70%, oxidative decomposition of carbonate compounds and carboxylate compounds in the electrolyte to generate HF is drastically accelerated, leading to an increase in positive electrode impedance. When a mass percentage A of the compound of formula I is below a lower limit of 0.5%, the effect of the compound of formula I improving the positive electrode interface impedance is not significant, making it difficult to effectively improve a low-temperature high-rate discharge capacity retention rate of the electrochemical apparatus. When a mass percentage B of the compound of formula II exceeds an upper limit of 20.0%, a percentage of the compound of formula II is too high, leading to insufficient conductivity of the electrochemical apparatus, thereby reducing kinetic performance of the electrochemical apparatus. When B is below a lower limit of 2.0%, the percentage of the compound of formula II is too low, and an auxiliary ability of the compound of formula II for the compound of formula I is insufficient, causing the compound of formula I to still accelerate oxidative decomposition of components in the electrolyte, damaging a positive electrode structure.

In some embodiments, A and B satisfy: 0.17 ≤ A/B ≤ 18. In some embodiments, 3.0 ≤ A/B ≤ 18.0. In some embodiments, 4.0 ≤ A/B ≤ 15.0. In some embodiments, 5.0 ≤ A/B ≤ 12.0. In some embodiments, 5.0 ≤ A/B ≤ 10.0. In some embodiments, a value of A/B is 2.0, 3.5, 5.5, 6.8, 9.8, 11.0, 12.7, 13.4, 14.5, 15.0, or a value within a range composed of any two of these values. In the present application, by selecting the mass percentages of the compound of formula I and the compound of formula II in the electrolyte to satisfy the above range, the compound of formula I and the compound of formula II can better cooperate to improve positive electrode impedance and interface stability of the positive electrode and the negative electrode, thereby concurrently improving a low-temperature high-rate discharge capacity retention rate and

a high-temperature cycling capacity retention rate of the electrochemical apparatus.

In some embodiments, the compound of formula I includes at least one of the following compounds:

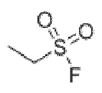
formula I-1
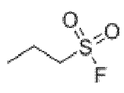
formula I-2
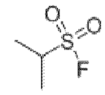
formula I-3
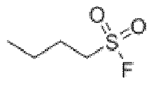
formula I-4
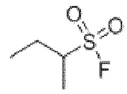
formula I-5

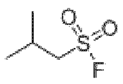
formula I-6
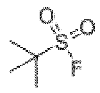
formula I-7
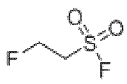
formula I-8
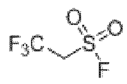
formula I-9
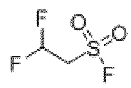
formula I-10

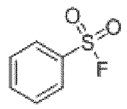
formula I-11
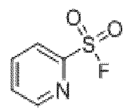
formula I-12
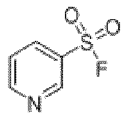
formula I-13
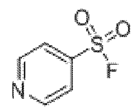
formula I-14
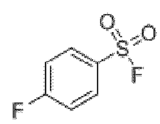
formula I-15

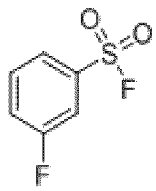
formula I-16
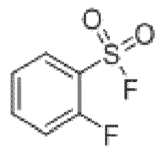
formula I-17
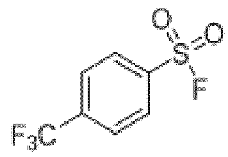
formula I-18
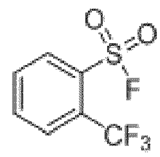
formula I-19

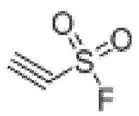
formula I-20
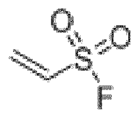
formula I-21.

By selecting the above compound of formula I, the compound of formula I can form a positive electrode interface passivation layer of a lithium-containing inorganic compound rich in S and F elements at a positive electrode interface, further reducing the positive electrode side impedance, thereby improving a low-temperature high-rate discharge capacity retention rate of the electrochemical apparatus.

In some embodiments, the compound of formula II includes at least one of the following compounds:

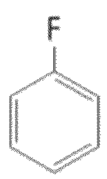
formula II-1
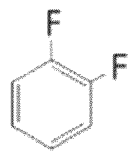
formula II-2
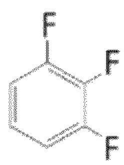
formula II-3
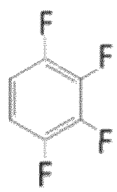
formula II-4
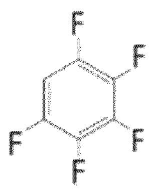
formula II-5

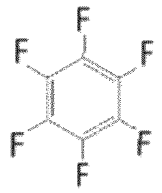 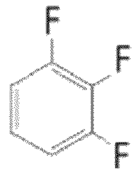 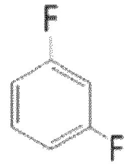 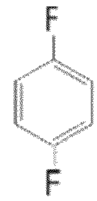 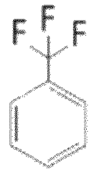

formula II-6 formula II-7 formula II-8 formula II-9 formula II-10

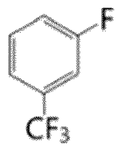 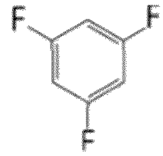 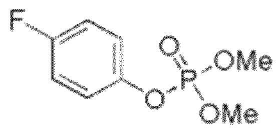

formula II-11 formula II-12 formula II-13

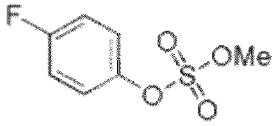 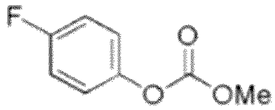

formula II-14 formula II-15.

By selecting the above compound of formula II, the compound of formula II has good oxidation resistance, and can further improve an overall oxidation resistance of the electrolyte, suppress a situation where the compound of formula I accelerates oxidative decomposition of components in the electrolyte to generate HF, protect the positive electrode, and improve a high-temperature cycling capacity retention rate of the electrochemical apparatus.

In some embodiments, the electrolyte further includes a first component, and the first component includes at least one of difluoroethylene carbonate, vinylene carbonate, or propylene carbonate. Based on a mass of the electrolyte, a mass percentage of the first component is C, where $5\% \leq C \leq 60\%$. In some embodiments, $8\% \leq C \leq 50\%$. In some embodiments, $10\% \leq C \leq 30\%$. In some embodiments, $15\% \leq C \leq 30\%$. In some embodiments, a value of C is 5%, 7%, 13%, 16%, 19%, 27%, 38%, 48%, 55%, 60%, or a value within a range composed of any two of these values. By adjusting a mass percentage of the first component in the electrolyte to satisfy the above range, the first component can improve an ionic conduction ability of the electrolyte. Additionally, a viscosity of the first component is relatively high, while viscosities of both the compound of formula I and the compound of formula II are relatively low. Adding the first component, the compound of formula I, and the compound of formula II to the electrolyte can improve a viscosity of the electrolyte.

In some embodiments, C, A, and B satisfy a relational expression: $0.8 \leq C/(A+B) \leq 1.15$. In some embodiments, $0.8 \leq C/(A+B) \leq 1.10$. In some embodiments, $0.9 \leq C/(A+B) \leq 1.05$. In some embodiments, $0.95 \leq C/(A+B) \leq 1.10$. In some embodiments, $1.0 \leq C/(A+B) \leq 1.15$. In some embodiments, a value of C/(A+B) is 0.80, 0.88, 0.94, 0.98, 1.01, 1.06, 1.10, 1.12, 1.14, 1.15, or a value within a range composed of any two of these values. By adjusting the mass percentage of the first component, the mass percentage of the compound of formula I, and the mass percentage of the compound of formula II in the electrolyte to satisfy a range of the above conditional expression, a viscosity of the electrolyte can be further improved, and an ionic conductivity of the electrolyte can be enhanced, thereby contributing to improving kinetic performance of the electrochemical apparatus.

In some embodiments, the electrolyte further includes a second component, and the second component includes at least one of diethyl carbonate, propyl propionate, or ethyl propionate. Based on a mass of the electrolyte, a mass percentage of the second component is D, where $10\% \leq D \leq 60\%$. In some embodiments, $12\% \leq D \leq 50\%$. In some embodiments, $15\% \leq D \leq 30\%$. In some embodiments, $30\% \leq D \leq 50\%$. In some embodiments, a value of D is 5%, 7%, 13%, 16%, 19%, 27%, 38%, 48%, 55%, 60%, or a value within a range composed of any two of these values. By adjusting a mass percentage of the second component in the electrolyte to satisfy the above range, the second component has a low viscosity, and can improve a wetting ability of the electrolyte. Both the compound of formula I and the compound of formula II have good dissociation ability for lithium salts, and when used in combination with the second component, can compensate for a deficiency in a dissociation ability of the second component for lithium salts, enhance a conductivity of the electrolyte, and contribute to improving a high-temperature cycling capacity retention rate and a low-temperature high-rate discharge capacity retention rate of the electrochemical apparatus.

In some embodiments, D, A, and B satisfy a relational expression: $0.90 \leq D/(A+B) \leq 2.00$. In some embodiments,

1.00 ≤ D/(A+B) ≤ 1.80. In some embodiments, 0.90 ≤ D/(A+B) ≤ 1.20. In some embodiments, 0.95 ≤ D/(A+B) ≤ 1.10. In some embodiments, 1.50 ≤ D/(A+B) ≤ 2.0. In some embodiments, a value of D/(A+B) is 0.90, 0.95, 1.05, 1.23, 1.36, 1.55, 1.68, 1.79, 1.91, 2.00, or a value within a range composed of any two of these values. By adjusting the mass percentage of the second component, the mass percentage of the compound of formula I, and the mass percentage of the compound of formula II in the electrolyte to satisfy a range of the above conditional expression, a conductivity of the electrolyte can be further enhanced, improving a high-temperature cycling capacity retention rate and a low-temperature high-rate discharge capacity retention rate of the electrochemical apparatus.

In some embodiments, the electrolyte further includes a nitrile compound. The nitrile compound includes at least one of a dinitrile compound or a trinitrile compound. In some embodiments, the dinitrile compound includes at least one of adiponitrile, succinonitrile, glutaronitrile, or 1,4-dicyano-2-butene. In some embodiments, the trinitrile compound includes at least one of 1,3,6-hexanetricarbonitrile or 1,3,5-pentanetricarbonitrile.

Based on a mass of the electrolyte, a mass percentage of the nitrile compound is E, where 2% ≤ E ≤ 10%. In some embodiments, 2% ≤ E ≤ 8%. In some embodiments, 4% ≤ E ≤ 8%. In some embodiments, 5% ≤ E ≤ 10%. In some embodiments, a value of E is 2.2%, 3.4%, 4.6%, 5.5%, 6.8%, 7.2%, 8.5%, 9.7%, 10.0%, or a value within a range composed of any two of these values. By ensuring that a mass percentage of the nitrile compound in the electrolyte satisfies the above range, the nitrile compound can synergistically act with the compound of formula I to form a positive electrode interface passivation layer rich in LiF and cyano groups, improve positive electrode interface stability, and further enhance an oxidation resistance of the electrolyte, thereby further improving high-temperature storage performance of the electrochemical apparatus.

In some embodiments, the electrolyte further includes a lithium salt, the lithium salt includes at least one of lithium hexafluorophosphate, lithium tetrafluoroborate, lithium bis(trifluoromethanesulfonyl)imide, lithium bis(fluorosulfonyl) imide, lithium difluoro(oxalato)borate, or lithium bis(oxalato)borate.

In some embodiments, based on the mass of the electrolyte, a mass percentage of the lithium salt is F, where 5% ≤ F ≤ 25%. In some embodiments, 5% ≤ F ≤ 20%. In some embodiments, 8% ≤ F ≤ 18%. In some embodiments, 10% ≤ F ≤ 15%. In some embodiments, a value of F is 5%, 6%, 7%, 9%, 11%, 12%, 17%, 19%, 20%, 23%, or a value within a range composed of any two of these values. The lithium salt used in the electrochemical apparatus can enhance an ionic conductivity of the electrochemical apparatus. By selecting a percentage of the lithium salt within the above range, a viscosity and a conductivity of the electrolyte can be balanced, contributing to improving a low-temperature high-rate discharge capacity retention rate of the electrochemical apparatus.

In the present application, features of different components included in the above electrolyte can be combined, and embodiments covered by the above combinations are all within the protection scope of the present application.

In the present application, the electrolyte further includes a non-aqueous organic solvent. The present application has no particular limitation on the non-aqueous organic solvent, as long as a purpose of the present application can be achieved. For example, the non-aqueous organic solvent may include at least one of a carbonate compound, a carboxylate compound, an ether compound, or other organic solvents. The above carbonate compound may include, but is not limited to at least one of a linear carbonate compound or a cyclic carbonate compound. The above linear carbonate compound may include, but is not limited to at least one of dimethyl carbonate (DMC), dipropyl carbonate (DPC), methyl propyl carbonate (MPC), ethyl propyl carbonate (EPC), or methyl ethyl carbonate (EMC). The above cyclic carbonate compound may include, but is not limited to at least one of ethylene carbonate (EC), butylene carbonate (BC), or vinyl ethylene carbonate (VEC). The above carboxylate compound may include, but is not limited to at least one of methyl formate, methyl acetate, ethyl acetate, n-propyl acetate, tert-butyl acetate, or methyl propionate. The ether compound may include, but is not limited to at least one of dibutyl ether, tetraethylene glycol dimethyl ether, diglyme, 1,2-dimethoxyethane, 1,2-diethoxyethane, ethoxymethoxy ethane, 2-methyltetrahydrofuran, or tetrahydrofuran. The above other organic solvents may include, but is not limited to at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, trimethyl phosphate, triethyl phosphate, trioctyl phosphate, or phosphate esters. The present application has no particular limitation on a mass percentage of the non-aqueous organic solvent in the electrolyte, as long as a purpose of the present application can be achieved. For example, based on the mass of the electrolyte, a mass percentage G of the non-aqueous organic solvent is 10% to 70%.

The present application further provides an electrochemical apparatus, the electrochemical apparatus includes the electrolyte as described above, and the electrochemical apparatus further includes a positive electrode, a negative electrode, and a separator.

The present application has no particular limitation on materials, structures, and processing methods of the positive electrode, the negative electrode, and the separator of the electrochemical apparatus, and any positive electrode, negative electrode, and separator applicable in the art are suitable for the present application.

I. Positive electrode

In the electrochemical apparatus of the present application, the positive electrode includes a positive electrode current collector and a positive electrode material layer disposed on at least one surface of the positive electrode current collector. The above "positive electrode material layer disposed on at least one surface of the positive electrode current collector" means that the positive electrode material layer may be disposed on one surface of the positive electrode current collector along a thickness direction thereof, or on both surfaces of the positive electrode current collector along a thickness direction thereof. It should be noted that the "surface" here may be an entire region of the positive electrode current collector, or a partial region of the positive electrode current collector, and the present application has no particular limitation, as long as a purpose of the present application can be achieved.

The positive electrode material layer of the present application includes a positive electrode active material, the positive electrode active material includes a substance capable of reversibly intercalating and deintercalating active ions such as lithium ions. The positive electrode material layer may be one layer or multiple layers, and each layer in the multiple positive electrode material layers may include the same or different positive electrode active materials. The present application has no particular limitation on the positive electrode active material, as long as a purpose of the present application can be achieved. For example, the positive electrode active material may include, but is not limited to at least one of lithium nickel cobalt manganese oxide (for example, NCM811, NCM622, NCM523, NCM111), lithium nickel cobalt aluminate, lithium iron phosphate, lithium-rich manganese-based materials, lithium cobalt oxide ($LiCoO_2$), lithium manganese oxide, lithium manganese iron phosphate, or lithium titanate.

The positive electrode material layer of the present application further includes a conductive agent and a binder. The present application has no particular limitation on the conductive agent and the binder in the positive electrode material layer, as long as a purpose of the present application can be achieved. For example, the conductive agent may include, but is not limited to at least one of conductive carbon black, carbon nanotubes (CNTs), carbon fiber, flake graphite, graphene, metal materials, or conductive polymers. The above conductive carbon black may include, but is not limited to Super P, acetylene black, or Ketjen black. The above carbon nanotubes may include, but are not limited to single-walled carbon nanotubes and/or multi-walled carbon nanotubes. The carbon fiber may include, but is not limited to vapor grown carbon fiber (VGCF) and/or carbon nanofiber. The metal material may include, but is not limited to metal powder and/or metal fiber, and specifically, the metal may include, but is not limited to at least one of copper, nickel, aluminum, or silver. The above conductive polymer may include, but is not limited to at least one of polyphenylene derivatives, polyaniline, polythiophene, polyacetylene, or polypyrrole. The binder may include, but is not limited to at least one of polyacrylate, polyimide, polyamide, polyamide-imide, polyvinylidene fluoride, polystyrene-butadiene copolymer (styrene-butadiene rubber, SBR), sodium alginate, polyvinyl alcohol, polytetrafluoroethylene, polyacrylonitrile, sodium carboxymethyl cellulose (CMC-Na), potassium carboxymethyl cellulose, sodium hydroxymethyl cellulose, or potassium hydroxymethyl cellulose. The present application has no particular limitation on a mass ratio of the positive electrode active material, the conductive agent, and the binder in the positive electrode material layer, and those skilled in the art can select according to actual needs, as long as a purpose of the present application can be achieved.

The present application has no particular limitation on the positive electrode current collector, as long as a purpose of the present application can be achieved. For example, the positive electrode current collector can include aluminum foil, aluminum alloy foil, or a composite current collector (for example, an aluminum-carbon composite current collector). The present application has no particular limitation on a thickness of the positive electrode current collector, as long as a purpose of the present application can be achieved. For example, a thickness of the positive electrode current collector is 5 $\mu$m to 20 $\mu$m, preferably 6 $\mu$m to 18 $\mu$m. The present application has no particular limitation on a thickness of the positive electrode material layer, as long as a purpose of the present application can be achieved. For example, a thickness of a single-sided positive electrode material layer is 30 $\mu$m to 120 $\mu$m.

Optionally, the positive electrode may further include a conductive layer, the conductive layer is located between the positive electrode current collector and the positive electrode material layer. The present application has no particular limitation on a composition of the conductive layer, which may be a conductive layer commonly used in the art. The conductive layer includes a conductive agent and a binder. The present application has no particular limitation on the conductive agent and the binder in the conductive layer, which can be at least one of the above conductive agents and the above binders. The present application has no particular limitation on a mass ratio of the conductive agent and the binder in the conductive layer, and those skilled in the art can select according to actual needs, as long as a purpose of the present application can be achieved.

In the present application, the electrochemical apparatus further includes a negative electrode, the negative electrode includes a negative electrode current collector and a negative electrode material layer disposed on at least one surface of the negative electrode current collector. The above "negative electrode material layer disposed on at least one surface of the negative electrode current collector" means that the negative electrode material layer may be disposed on one surface of the negative electrode current collector along a thickness direction thereof, or on both surfaces of the negative electrode current collector along a thickness direction thereof. It should be noted that the "surface" here may be

an entire region of the negative electrode current collector, or a partial region of the negative electrode current collector, and the present application has no particular limitation, as long as a purpose of the present application can be achieved.

The negative electrode material layer of the present application includes a negative electrode active material. The present application has no particular limitation on the negative electrode active material, as long as a purpose of the present application can be achieved. For example, the negative electrode active material may include at least one of natural graphite, artificial graphite, mesocarbon microbeads (MCMB), hard carbon, soft carbon, silicon, silicon-carbon composite, $SiO_x$ ($0.5 < x < 1.6$), Li-Sn alloy, Li-Sn-O alloy, Sn, SnO, $SnO_2$, lithium titanate $Li_4Ti_5O_{12}$ with a spinel structure, Li-Al alloy, or metallic lithium.

The negative electrode material layer of the present application further includes a binder. The present application has no particular limitation on the binder in the negative electrode material layer, as long as a purpose of the present application can be achieved. For example, the binder can be at least one of the above binders. The negative electrode material layer of the present application further includes a conductive agent. The present application has no particular limitation on the conductive agent in the negative electrode material layer, as long as a purpose of the present application can be achieved. For example, the conductive agent can be at least one of the above conductive agents. The present application has no particular limitation on a mass ratio of the negative electrode active material, the binder, and the conductive agent in the negative electrode material layer, and those skilled in the art can select according to actual needs, as long as a purpose of the present application can be achieved.

The present application has no particular limitation on the negative electrode current collector, as long as a purpose of the present application can be achieved. For example, the negative electrode current collector may include copper foil, copper alloy foil, nickel foil, stainless steel foil, titanium foil, nickel foam, copper foam, or a composite current collector. The present application has no particular limitation on a thickness of the negative electrode current collector, as long as a purpose of the present application can be achieved. For example, a thickness of the negative electrode current collector is 5 μm to 16 μm. The present application has no particular limitation on a thickness of the negative electrode material layer, as long as a purpose of the present application can be achieved. For example, a thickness of a single-sided negative electrode material layer is 30 μm to 120 μm.

Optionally, the negative electrode may further include a conductive layer, and the conductive layer is located between the negative electrode current collector and the negative electrode material layer. The present application has no particular limitation on a composition of the conductive layer, which may be a conductive layer commonly used in the art. The conductive layer includes a conductive agent and a binder. The present application has no particular limitation on the conductive agent and the binder in the conductive layer, which may be at least one of the above conductive agents and the above binders. The present application has no particular limitation on a mass ratio of the conductive agent and the binder in the conductive layer, and those skilled in the art can select according to actual needs, as long as a purpose of the present application can be achieved. The present application has no particular limitation on a thickness of the conductive layer, as long as a purpose of the present application can be achieved. For example, a thickness of the conductive layer is 1 μm to 10 μm.

In the present application, the electrochemical apparatus further includes a separator, and the separator is used to separate the positive electrode and the negative electrode, prevent an internal short circuit of the electrochemical apparatus, allow free passage of electrolyte ions, and not affect an electrochemical charge-discharge process. The present application has no particular limitation on the separator, as long as a purpose of the present application can be achieved. For example, a material of the separator may include, but is not limited to at least one of polyolefin (PO) mainly composed of polyethylene (PE) and polypropylene (PP), polyester (for example, polyethylene terephthalate (PET) film), cellulose, polyimide (PI), polyamide (PA), spandex, or aramid; and a type of the separator can include at least one of a woven membrane, a non-woven membrane, a microporous membrane, a composite membrane, a rolled membrane, or a spun membrane. The present application has no particular limitation on a thickness of the separator, as long as a purpose of the present application can be achieved. For example, a thickness of the separator is 3 μm to 30 μm.

In the present application, the separator may include a substrate and a surface treatment layer. The substrate may be a non-woven fabric or a composite membrane with a porous structure, and a material of the substrate may include at least one of polyethylene, polypropylene, polyethylene terephthalate, or polyimide. Optionally, a polypropylene porous membrane, a polyethylene porous membrane, a polypropylene non-woven fabric, a polyethylene non-woven fabric, or a polypropylene-polyethylene-polypropylene porous composite membrane may be used. Optionally, a thickness of the substrate is 3 μm to 25 μm. Optionally, a surface treatment layer is disposed on at least one surface of the substrate, the surface treatment layer may be a polymer layer or an inorganic layer, or a layer formed by mixing a polymer and an inorganic substance. For example, the inorganic layer includes inorganic particles and a binder. The present application has no particular limitation on the above inorganic particles, which may include, for example, at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The present application has no particular limitation on the above binder, which may be, for example, at least one of the aforementioned binders. The polymer layer includes a polymer, and a material of the

polymer includes at least one of polyamide, polyacrylonitrile, acrylate polymer, polyacrylic acid, polyvinylpyrrolidone, polyvinyl ether, polyvinylidene fluoride, or poly(vinylidene fluoride-hexafluoropropylene). Optionally, a thickness of the surface treatment layer is 1 μm to 10 μm.

The electrochemical apparatus of the present application further includes a packaging bag for accommodating the positive electrode, the separator, the negative electrode, and the electrolyte, as well as other components known in the art in the electrochemical apparatus, and the present application has no limitation on the above other components. The present application has no particular limitation on the packaging bag, which may be a packaging bag known in the art, as long as a purpose of the present application can be achieved.

The present application has no particular limitation on a type of the electrochemical apparatus, which may include any apparatus where an electrochemical reaction occurs. In the present application, the electrochemical apparatus may include, but is not limited to a lithium metal electrochemical apparatus, a lithium-ion electrochemical apparatus (lithium-ion battery), a lithium polymer electrochemical apparatus, or a lithium-ion polymer electrochemical apparatus (lithium-ion polymer battery).

A preparation process of the electrochemical apparatus of the present application is well known to those skilled in the art, and the present application has no particular limitation. For example, the preparation process may include, but is not limited to the following steps: stacking the positive electrode, the separator, and the negative electrode in sequence, and performing operations such as winding and folding as needed to obtain an electrode assembly being of a wound structure, placing the electrode assembly into a packaging bag, injecting the electrolyte into the packaging bag and sealing to obtain an electrochemical apparatus; or, stacking the positive electrode, the separator, and the negative electrode in sequence, and then fixing four corners of an entire laminated structure with tape to obtain an electrode assembly with a laminated structure, placing the electrode assembly into a packaging bag, injecting the electrolyte into the packaging bag and sealing to obtain the electrochemical apparatus. In addition, if necessary, overcurrent prevention elements, guide plates, and the like may be placed in the packaging bag to prevent pressure rise and overcharge-discharge inside the electrochemical apparatus.

The present application further provides an electronic apparatus including the electrochemical apparatus in any of the aforementioned embodiments. Therefore, the electronic apparatus provided in the present application has good use performance.

A type of the electronic apparatus is not particularly limited in the present application, and the electronic apparatus can be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

The preparation of the electrochemical apparatus is described below in conjunction with specific examples. Those skilled in the art will understand that preparation methods described in the present application are only examples, and any other suitable preparation methods are within the scope of the present application.

## Examples

The following uses a lithium-ion battery as an example, and examples and comparative examples are provided to more specifically describe implementations of the electrochemical apparatus of the present application. Those skilled in the art will understand that preparation methods described in the present application are only examples, and any other suitable preparation methods are within the scope of the present application. Various tests and evaluations were conducted according to the methods described below. In addition, unless otherwise specified, "part" and "%" are based on weight.

## Test methods

### 1. High-temperature (45°C) cycling capacity retention rate test method

Steps of the high-temperature (45°C) cycling capacity retention rate test are as follows:

(1) A lithium-ion battery was placed at 45°C and left standing for 60 min.
(2) The lithium-ion battery was charged at a constant current of 1.2C rate to 4.2V, and was charged at a constant voltage until a current was less than 0.7C.
(3) The lithium-ion battery was charged at a constant current of 0.7C rate to 4.5V, charged at a constant voltage until a

current was less than 0.05C, and left standing for 5 min.

(4) The lithium-ion battery was discharged at a constant current of 0.5C to 3V, and left standing for 5 min.

Steps (2) to (4) constituted one charge-discharge cycle. Steps (2) to (4) were repeated for 600 cycles. A discharge capacity of the lithium-ion battery in a first charge-discharge cycle was recorded as C1, and a discharge capacity of the lithium-ion battery in a 600th charge-discharge cycle was recorded as C600.

High-temperature (45°C) cycling capacity retention rate = C600/C1 $\times$ 100%.

2. Low-temperature (-20°C) high-rate discharge capacity retention rate test method

Steps of the low-temperature (-20°C) rate discharge test are as follows:

(1) A lithium-ion battery was placed at -20°C and left standing for 30 min.

(2) The lithium-ion battery was discharged at a 0.2C rate to 3V, and was left standing for 10 min.

(3) The lithium-ion battery was charged at a constant current of 1.2C rate to 4.2V, and charged at a constant voltage until a current was less than 0.6C.

(4) The lithium-ion battery was charged at a constant current of 0.6C rate to 4.5V, charged at a constant voltage until a current was less than 0.05C, and left standing for 10 min.

(5) The lithium-ion battery was discharged at a constant current of Cx rate to 3V, where Cx = 0.2C, 0.5C, 1C, 1.5C, and 2C.

Steps (2) to (5) constituted one discharge process. The discharge process was repeated according to steps (2) to (5) until all Cx rate discharge processes were tested. A discharge capacity of the lithium-ion battery after a 0.2C discharge process was recorded as D1. After all Cx rate discharge processes from low to high were traversed, a discharge capacity of the lithium-ion battery was tested and recorded as Dmax.

Low-temperature (-20°C) high-rate discharge capacity retention rate = Dmax/D1 $\times$ 100%.

Example 1-1

(1) Preparation of positive electrode

A positive electrode active material lithium cobalt oxide $LiCoO_2$, a conductive agent conductive carbon black, and a binder polyvinylidene fluoride PVDF were mixed at a mass ratio of 97.9:0.9:1.2. N-methylpyrrolidone NMP was added as a solvent and stirred well under a vacuum mixer to obtain a positive electrode slurry with a solid content of 75wt%. The positive electrode slurry was evenly applied to one surface of a positive electrode current collector aluminum foil with a thickness of 9 $\mu$m, dried at 85°C, and cold-pressed to obtain a positive electrode coated on one side with a positive electrode material layer with a thickness of 95 $\mu$m. Thereafter, the above steps were repeated on another surface of the aluminum foil to obtain a positive electrode coated with the positive electrode material layer on two sides. After cutting and welding of a positive electrode tab, that is, an aluminum tab, a positive electrode with specifications of 74 mm $\times$ 851 mm was obtained for use, and a compacted density of the positive electrode material layer was 4.20 g/cm$^3$.

(2) Preparation of negative electrode

A negative electrode active material artificial graphite, a binder styrene-butadiene rubber SBR, and a thickener sodium carboxymethyl cellulose CMC were mixed at a mass ratio of 97.4:1.4:1.2. Deionized water was added as a solvent, and stirred well under a vacuum mixer to obtain a negative electrode slurry with a solid content of 50wt%. The negative electrode slurry was evenly applied to one surface of a negative electrode current collector copper foil with a thickness of 10 $\mu$m, dried at 85°C, and cold-pressed to obtain a negative electrode coated on one side with a negative electrode material layer with a thickness of 130 $\mu$m. Thereafter, the above steps were repeated on another surface of the copper foil to obtain a negative electrode coated with the negative electrode material layer on two sides. After cutting and welding of a negative electrode tab nickel tab, a negative electrode with specifications of 76 mm $\times$ 867 mm was obtained for use, and a compacted density of the negative electrode material layer was 1.80 g/cm$^3$.

(3) Preparation of separator

A 9 $\mu$m thick polypropylene film was used as a porous substrate layer.

(4) Preparation of electrolyte

In an argon atmosphere glove box with a water content of less than 10 ppm, ethylene carbonate: dimethyl carbonate: methyl ethyl carbonate = 1:1:1 were mixed to obtain a base solvent, then a compound of formula I, a compound of formula II, and lithium hexafluorophosphate ($LiPF_6$) were dissolved in the base solvent to obtain an electrolyte. Based on a mass of the electrolyte, a mass percentage of $LiPF_6$ was 12.5%.

Mass percentages of the compound of formula I and the compound of formula II are shown in Table 1, and the remainder was the base solvent.

(5) Assembly of lithium-ion battery

The positive electrode, separator, negative electrode, and separator prepared above were stacked in sequence, with the separator positioned between the positive electrode and the negative electrode to serve as an isolation, and then wound to obtain an electrode assembly. After tab welding, the electrode assembly was placed in an aluminum-plastic film packaging bag, and dried in a vacuum oven at 85°C for 12 h to remove moisture. The prepared electrolyte was injected, followed by vacuum encapsulation, standing, formation, shaping, and capacity testing processes, to obtain a lithium-ion battery.

Examples 1-2 to 1-22, except for adjusting a type and a percentage A of the compound of formula I, and adjusting a type and a percentage B of the compound of formula II in the preparation of the electrolyte as shown in Table 1, the rest was the same as in Example 1-1. A mass percentage of the base solvent was changed accordingly, and a mass percentage of the lithium salt remained unchanged.

Comparative example 1-1, except for not adding the compound of formula I in the electrolyte, the rest was the same as in Example 1-6. A mass percentage of the base solvent was changed accordingly, and a mass percentage of the lithium salt remained unchanged.

Comparative example 1-2, except for not adding the compound of formula II in the electrolyte, the rest was the same as in Example 1-6. A mass percentage of the base solvent was changed accordingly, and a mass percentage of the lithium salt remained unchanged.

Comparative examples 1-3 to 1-6, except for adjusting a percentage A of the compound of formula I and a percentage B of the compound of formula II in the preparation of the electrolyte as shown in Table 1, the rest was the same as in Example 1-6. A mass percentage of the base solvent was changed accordingly, and a mass percentage of the lithium salt remained unchanged.

Examples 2-1 to 2-8, except for adjusting a type and a percentage C of the first component in the preparation of the electrolyte as shown in Table 2, the rest was the same as in Example 1-6. A mass percentage of the base solvent was changed accordingly, and a mass percentage of the lithium salt remained unchanged.

Examples 3-1 to 3-6, except for adjusting a type and a percentage D of the second component in the preparation of the electrolyte as shown in Table 3, the rest was the same as in Example 1-6. A mass percentage of the base solvent was changed accordingly, and a mass percentage of the lithium salt remained unchanged.

Example 3-7, except for adding the first component and the second component in the preparation of the electrolyte as shown in Table 3, the rest was the same as in Example 1-6. A mass percentage of the base solvent was changed accordingly, and a mass percentage of the lithium salt remained unchanged.

Examples 4-1 to 4-5, except for adding a nitrile compound in the preparation of the electrolyte as shown in Table 4, the rest was the same as in Example 1-6. A mass percentage of the base solvent was changed accordingly, and a mass percentage of the lithium salt remained unchanged.

Example 4-6, except for adding a nitrile compound and the first component in the preparation of the electrolyte as shown in Table 4, the rest was the same as in Example 1-6. A mass percentage of the base solvent was changed accordingly, and a mass percentage of the lithium salt remained unchanged.

Example 4-7, except for adding a nitrile compound and the second component in the preparation of the electrolyte as shown in Table 4, the rest was the same as in Example 1-6. A mass percentage of the base solvent was changed accordingly, and a mass percentage of the lithium salt remained unchanged.

Example 4-8, except for adding a nitrile compound, the first component, and the second component in the preparation of the electrolyte as shown in Table 4, the rest was the same as in Example 1-6. A mass percentage of the base solvent was changed accordingly, and a mass percentage of the lithium salt remained unchanged.

Preparation parameters and performance parameters of Examples 1-1 to 1-22 and Comparative examples 1-1 to 1-6 are shown in Table 1.

**Table 1**

| | Type of compound of formula I | Percentage A of compound of formula I (%) | Type of compound of formula II | Percentage B of compound of formula II (%) | A/B | High-temperature (45°C) cycling capacity retention rate (%) | Low-temperature (-20°C) high-rate discharge capacity retention rate (%) |
|---|---|---|---|---|---|---|---|
| Comparative example 1-1 | / | / | II-4 | 5.30 | / | 70.4 | 63.2 |
| Comparative example 1-2 | I-1 | 8.00 | / | / | / | 64.2 | 72.5 |
| Comparative example 1-3 | I-1 | 0.005 | II-4 | 5.30 | 0.0009 | 69.8 | 65.4 |
| Comparative example 1-4 | I-1 | 72 | II-4 | 5.30 | 13.58 | 70.1 | 66.7 |
| Comparative example 1-5 | I-1 | 8.00 | II-4 | 1.80 | 4.44 | 66.4 | 74.2 |
| Comparative example 1-6 | I-1 | 8.00 | II-4 | 21.00 | 0.38 | 71.1 | 66.3 |
| Example 1-1 | I-1 | 0.01 | II-4 | 5.30 | 0.002 | 80.2 | 69.4 |
| Example 1-2 | I-1 | 0.15 | II-4 | 5.30 | 0.03 | 81.0 | 75.9 |
| Example 1-3 | I-1 | 0.50 | II-4 | 5.30 | 0.09 | 81.3 | *77.0* |
| Example 1-4 | I-1 | 0.80 | II-4 | 5.30 | 0.15 | 81.5 | 78.9 |
| Example 1-5 | I-1 | 1.02 | II-4 | 5.30 | 0.17 | 82.8 | 83.4 |
| Example 1-6 | I-1 | 8.00 | II-4 | 5.30 | 1.51 | 83.4 | 84.6 |
| Example 1-7 | I-1 | 20.00 | II-4 | 5.30 | 3.77 | 83.6 | 86.2 |
| Example 1-8 | I-1 | 50.00 | II-4 | 5.30 | 9.43 | 84.1 | 86.4 |
| Example 1-9 | I-1 | 70.00 | II-4 | 5.30 | 13.21 | 80.6 | 78.3 |
| Example 1-10 | I-1 | 70.00 | II-4 | 3.88 | 18.00 | 83.1 | 78.7 |
| Example 1-11 | I-1+I-3 | 10+35 | II-4 | 5.30 | 8.49 | 83.1 | 88.3 |
| Example 1-12 | I-1+I-6 | 35+35 | II-4 | 5.30 | 13.21 | 82.5 | 86.8 |
| Example 1-13 | I-1+I-8+-I-21 | 10+30+30 | II-4 | 5.30 | 13.21 | 80.9 | 85.1 |
| Example 1-14 | I-1 | 8.00 | II-4 | 2.00 | 3.64 | 75.7 | 84.5 |
| Example 1-15 | I-1 | 8.00 | II-4 | 4.00 | 2.00 | 78.9 | 84.1 |
| Example 1-16 | I-1 | 8.00 | II-4 | 5.00 | 1.60 | 81.5 | 85.7 |
| Example 1-17 | I-1 | 8.00 | II-4 | 8.00 | 0.99 | 82.6 | 86.0 |
| Example 1-18 | I-1 | 8.00 | II-4 | 15.50 | 0.52 | 84.8 | 86.4 |

(continued)

| | Type of compound of formula I | Percentage A of compound of formula I (%) | Type of compound of formula II | Percentage B of compound of formula II (%) | A/B | High-temperature (45°C) cycling capacity retention rate (%) | Low-temperature (-20°C) high-rate discharge capacity retention rate (%) |
|---|---|---|---|---|---|---|---|
| Example 1-19 | I-1 | 8.00 | II-4 | 20.00 | 0.40 | 84.6 | 85.7 |
| Example 1-20 | I-1 | 60.00 | II-1+II-8+II-11 | 4+1+1 | 15.00 | 83.0 | 85.9 |
| Example 1-21 | I-1 | 60.00 | II-3+II-7 | 3+3 | 9.68 | 83.3 | 84.1 |
| Example 1-22 | I-4+I-10 | 20+40 | II-4+II-11 | 1+5 | 7.39 | 83.8 | 83.8 |
| Note: "/" in Table 1 indicates no corresponding parameter. | | | | | | | |

In the present application, regarding performance parameters, a larger high-temperature 45°C cycling capacity retention rate indicates a better high-temperature 45°C cycling capacity retention rate of a lithium-ion battery, and a larger low-temperature -20°C high-rate discharge capacity retention rate indicates a better high-rate discharge capacity retention rate of an electrochemical apparatus in a low-temperature -20°C environment.

From Comparative example 1-1, Comparative examples 1-3 and 1-4, and Examples 1-1 to 1-13, it can be seen that adding the compound of formula I and the compound of formula II to the electrolyte, with a content of the compound of formula I satisfying $0.01\% \le A \le 70\%$, and from Comparative example 1-2, Comparative examples 1-5 and 1-6, and Examples 1-14 to 1-22, it can be seen that adding the compound of formula I and the compound of formula II to the electrolyte, with the percentage B of the compound of formula II satisfying $2.0\% \le B \le 20\%$, both a high-temperature 45°C cycling capacity retention rate and a low-temperature - 20°C high-rate discharge capacity retention rate increase, indicating that the compound of formula I and the compound of formula II can concurrently improve a high-temperature 45°C cycling capacity retention rate and a low-temperature -20°C high-rate discharge capacity retention rate of a lithium-ion battery.

From Comparative examples 1-3 and 1-4 and Examples 1-1 to 1-10, it can be seen that when the percentage A of the compound of formula I is less than 0.01%, an addition amount of the compound of formula I is too low, resulting in almost no improvement in a low-temperature (-20°C) high-rate discharge capacity retention rate of a lithium-ion battery. When the percentage A of the compound of formula I is greater than 70%, the percentage of the compound of formula I is too high, accelerating oxidative decomposition of the electrolyte to generate HF, and an oxidation resistance of the compound of formula II is insufficient, leading to a decrease in a high-temperature 45°C cycling capacity retention rate of a lithium-ion battery.

From Comparative examples 1-3 and 1-4 and Examples 1-14 to 1-19, it can be seen that when the percentage B of the compound of formula II is less than 2.0%, the percentage of the compound of formula II is too low, and an oxidation resistance of the electrolyte is insufficient, making it difficult to suppress adverse reactions caused by the compound of formula I accelerating oxidative decomposition of components in the electrolyte, leading to a deterioration in a low-temperature - 20°C high-rate discharge capacity retention rate of an electrochemical apparatus. When the percentage B of the compound of formula II is greater than 20.0%, the percentage of the compound of formula II is too high, resulting in insufficient conductivity of the electrolyte, and both a high-temperature 45°C cycling capacity retention rate and a low-temperature -20°C high-rate discharge capacity retention rate of an electrochemical apparatus are reduced.

Preparation parameters and performance parameters of Examples 2-1 to 2-8 are shown in Table 2.

**Table 2**

| | Percentage A of compound of formula I (%) | Percentage B of compound of formula II (%) | Type of first component | Percentage C of first component (%) | C/(A+B) | High-temperature (45°C) cycling capacity retention rate (%) | Low-temperature (-20°C) high-rate discharge capacity retention rate (%) |
|---|---|---|---|---|---|---|---|
| Example 1-6 | 8.00 | 5.30 | / | / | / | 83.4 | 84.6 |
| Example 2-1 | 8.00 | 5.30 | Difluoroethylene carbonate | 5.00 | 0.38 | 84.5 | 85.0 |
| Example 2-2 | 8.00 | 5.30 | Difluoroethylene carbonate | 10.64 | 0.80 | 85.9 | 85.5 |
| Example 2-3 | 8.00 | 5.30 | Difluoroethylene carbonate | 15.3 | 1.15 | 86.5 | 86.6 |
| Example 2-4 | 8.00 | 5.30 | Difluoroethylene carbonate | 16.0 | 1.20 | 87.4 | 87.6 |
| Example 2-5 | 8.00 | 5.30 | Difluoroethylene carbonate | 32.0 | 2.41 | 85.5 | 87.5 |
| Example 2-6 | 8.00 | 5.30 | Difluoroethylene carbonate | 40.0 | 3.01 | 84.6 | 86.9 |
| Example 2-7 | 8.00 | 5.30 | Vinylene carbonate + propylene carbonate | 5+55 | 4.51 | 84.4 | 85.2 |
| Example 2-8 | 8.00 | 5.30 | Difluoroethylene carbonate + propylene carbonate | 5+25 | 2.26 | 85.9 | 88.1 |
| Note: "/" in Table 2 indicates no corresponding parameter. | | | | | | | |

Adding the first component to the electrolyte can improve an ionic conduction ability of the electrolyte. Adding all the compound of formula I, the compound of formula II, and the first component to the electrolyte can address an issue of high viscosity of the electrolyte caused by the presence of the first component. From Example 1-6 and Examples 2-1 to 2-8, it can be seen that adding the first component to the electrolyte increases both a high-temperature 45°C cycling capacity retention rate and a low-temperature -20°C high-rate discharge capacity retention rate of a lithium-ion battery, indicating improvements in both a high-temperature 45°C cycling capacity retention rate and a low-temperature -20°C high-rate discharge capacity retention rate of a lithium-ion battery.

Preparation parameters and performance parameters of Examples 3-1 to 3-7 are shown in Table 3.

Table 3

| Item | Percentage A of compound of formula I (%) | Percentage B of compound of formula II (%) | Type of first component | Percentage C of first component (%) | Type of second component | Percentage D of second component (%) | D/(A+B) | High-temperature (45°C) cycling capacity retention rate (%) | Low-temperature (-20°C) high-rate discharge capacity retention rate (%) |
|---|---|---|---|---|---|---|---|---|---|
| Example 1-6 | 8.00 | 5.30 | / | / | / | / | / | 83.4 | 84.6 |
| Example 3-1 | 8.00 | 5.30 | / | / | Diethyl carbonate | 10.0 | 0.75 | 85.1 | 86.8 |
| Example 3-2 | 8.00 | 5.30 | / | / | Diethyl carbonate | 12.0 | 0.90 | 86.7 | 87.1 |
| Example 3-3 | 8.00 | 5.30 | / | / | Diethyl carbonate | 18.0 | 1.35 | 86.5 | 87.9 |
| Example 3-4 | 8.00 | 5.30 | / | / | Diethyl carbonate | 26.6 | 2.00 | 86.2 | 88.7 |
| Example 3-5 | 8.00 | 5.30 | / | / | Diethyl carbonate + ethyl propionate | 16+14 | 2.26 | 85.6 | 89.7 |
| Example 3-6 | 8.00 | 5.30 | / | / | Propyl propionate + ethyl propionate | 20+20 | 3.00 | 85.5 | 92.3 |
| Example 3-7 | 8.00 | 5.30 | Difluoroethylene carbonate | 16 | Diethyl carbonate + propyl propionate | 10+16 | 1.95 | 86.3 | 91.9 |

Note: "/" in Table 3 indicates no corresponding parameter.

The second component has a low viscosity, which can improve a wetting ability of the electrolyte. Both the compound of formula I and the compound of formula II have good dissociation ability for lithium salts, and when used in combination with the second component, can compensate for a deficiency in a dissociation ability of the second component for lithium salts, enhancing a conductivity of the electrolyte. From Example 1-6 and Examples 3-1 to 3-7, it can be seen that adding the second component to the electrolyte increases both a high-temperature 45°C cycling capacity retention rate and a low-temperature -20°C high-rate discharge capacity retention rate of a lithium-ion battery, indicating improvements in both a high-temperature 45°C cycling capacity retention rate and a low-temperature -20°C high-rate discharge capacity retention rate of a lithium-ion battery.

Preparation parameters and performance parameters of Examples 4-1 to 4-8 are shown in Table 4.

Table 4

| Item | Percentage A of compound of formula I (%) | Percentage B of compound of formula II (%) | Type of first component | Percentage C of first component (%) | Type of second component | Percentage D of second component (%) | Type of nitrile compound (mass percentage % in parentheses) | Percentage E of nitrile compound (%) | High-temperature (45°C) cycling capacity retention rate (%) | Low-temperature (-20°C) high-rate discharge capacity retention rate (%) |
|---|---|---|---|---|---|---|---|---|---|---|
| Example 1-6 | 8.00 | 5.30 | / | / | / | / | / | / | 83.4 | 84.6 |
| Example 4-1 | 8.00 | 5.30 | / | / | / | / | Adiponitrile | 2.00 | 85.6 | 85.5 |
| Example 4-2 | 8.00 | 5.30 | / | / | / | / | Adiponitrile | 5.98 | 86.8 | 86.2 |
| Example 4-3 | 8.00 | 5.30 | / | / | / | / | Adiponitrile | 8.00 | 86.1 | 85.6 |
| Example 4-4 | 8.00 | 5.30 | / | / | / | / | Adiponitrile | 10.00 | 85.7 | 85.1 |
| Example 4-5 | 8.00 | 5.30 | / | / | / | / | Adiponitrile + 1,3,6-hexanetricarbonitrile | 2+2 | 86.2 | 85.6 |
| Example 4-6 | 8.00 | 5.30 | difluoroethylene carbonate | 16 | / | / | Adiponitrile | 4.40 | 86.4 | 86.4 |
| Example 4-7 | 8.00 | 5.30 | / | / | diethyl carbonate | 26 | Adiponitrile | 4.52 | 85.5 | 83.5 |
| Example 4-8 | 8.00 | 5.30 | difluoroethylene carbonate | 16 | diethyl carbonate | 26 | Adiponitrile | 4.20 | 87.0 | 87.6 |

Note: "/" in Table 4 indicates no corresponding parameter.

The nitrile compound can synergistically act with the compound of formula I to form a positive electrode interface passivation layer rich in LiF and cyano groups, improving positive electrode interface stability. From Example 1-6 and Examples 4-1 to 4-8, it can be seen that adding the nitrile compound to the electrolyte increases both a high-temperature 45°C cycling capacity retention rate and a low-temperature -20°C high-rate discharge capacity retention rate of a lithium-ion battery, indicating that the nitrile compound improves both a high-temperature 45°C cycling capacity retention rate and a low-temperature -20°C high-rate discharge capacity retention rate of a lithium-ion battery.

It should be noted that, in this document, relational terms such as first and second are only used to distinguish one entity or operation from another entity or operation, and do not necessarily require or imply any such actual relationship or order between these entities or operations. In addition, the terms "include", "comprise", or any of their variants are intended to cover a non-exclusive inclusion, such that a process, method, or article that includes a series of elements includes not only those elements but also other elements that are not expressly listed, or further includes elements inherent to such process, method, or article.

Some embodiments in this specification are described in a related manner. For a part that is the same or similar between different embodiments, reference may be made between these embodiments. Each embodiment focuses on differences from other embodiments.

The foregoing descriptions are merely preferred embodiments of the present application, and are not intended to limit the present application. Any modifications, equivalent replacements, improvements, and the like made without departing from the spirit and principle of the present application shall fall within the protection scope of the present application.

## Claims

1. An electrolyte comprising a compound of formula I and a compound of formula II;

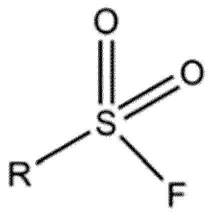

formula I,

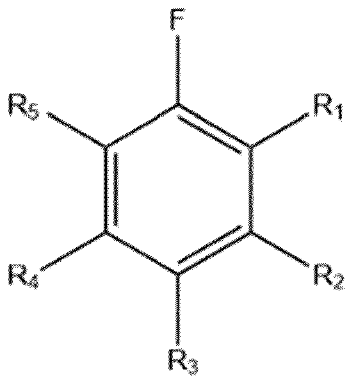

formula II;

wherein in formula I, R is selected from any one of an unsubstituted or $R_0$-substituted $C_2$-$C_6$ alkyl, an unsubstituted or $R_0$-substituted $C_2$-$C_6$ alkenyl, an unsubstituted or $R_0$-substituted $C_2$-$C_6$ alkynyl, an unsubstituted or $R_0$-substituted $C_3$-$C_6$ nitrogen-containing heteroaryl, or an unsubstituted or $R_0$-substituted $C_6$-$C_{12}$ aryl, a substituent $R_0$ of each group is independently selected from any one of an unsubstituted or substituted $C_1$-$C_6$ alkyl, and during substitution, a substituent is fluorine;

in formula II, $R_1$ to $R_5$ are each independently selected from any one of fluorine, an unsubstituted or substituted $C_1$-$C_5$ alkyl, an unsubstituted or substituted $C_1$-$C_5$ phosphate group, an unsubstituted or substituted $C_1$-$C_5$ sulfonate group, or an unsubstituted or substituted $C_1$-$C_5$ ester group, and during substitution, a substituent is fluorine; and

based on a mass of the electrolyte, a mass percentage of the compound of formula I is A, and a mass percentage of the compound of formula II is B, **characterized in that**, $0.01\% \leq A \leq 70\%$, and $2.0\% \leq B \leq 20\%$.

2. The electrolyte according to claim 1, **characterized in that**, the electrolyte satisfies at least one of the following conditions:

$$(1)\ 0.5\% \leq A \leq 50\%;$$

$$(2)\ 4\% \leq B \leq 8\%;$$

or

$$(3)\ 0.17 \leq A/B \leq 18.$$

3. The electrolyte according to claim 1 or 2, **characterized in that**, the compound of formula I comprises at least one of the following compounds:

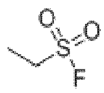 formula I-1, 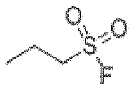 formula I-2, 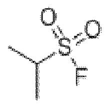 formula I-3, 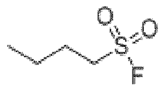 formula I-4, 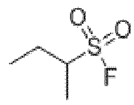 formula I-5,

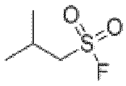 formula I-6, 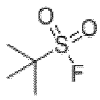 formula I-7, 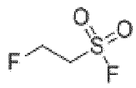 formula I-8, 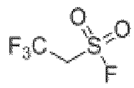 formula I-9, 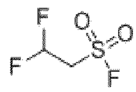 formula I-10,

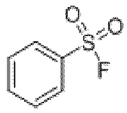 formula I-11, 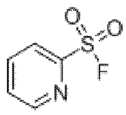 formula I-12, 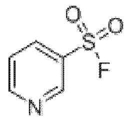 formula I-13, 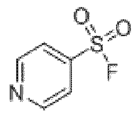 formula I-14, 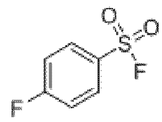 formula I-15,

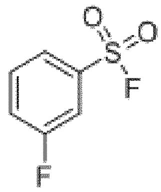 formula I-16, 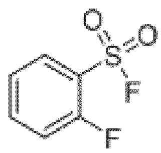 formula I-17, 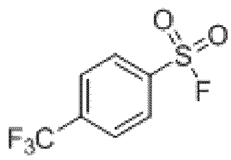 formula I-18, 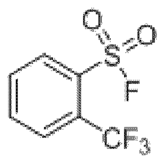 formula I-19,

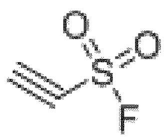 formula I-20, 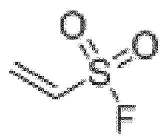 or formula I-21.

4. The electrolyte according to any one of claims 1 to 3, **characterized in that**, the compound of formula II comprises at least one of the following compounds:

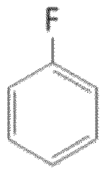 formula II-1, 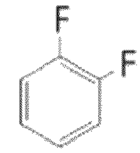 formula II-2, 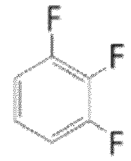 formula II-3, 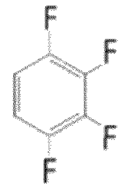 formula II-4, 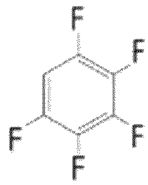 formula II-5,

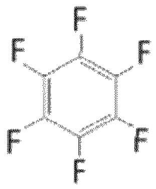 formula II-6, 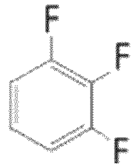 formula II-7, 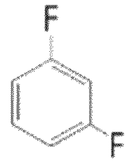 formula II-8, 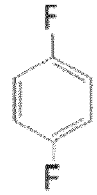 formula II-9,

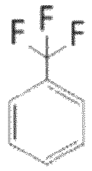 formula II-10, 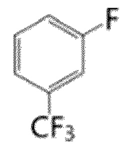 formula II-11, 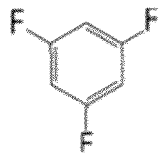 formula II-12, 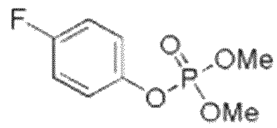 formula II-13,

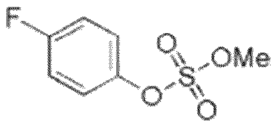 formula II-14, 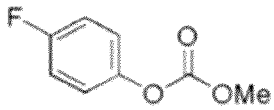 or formula II-15.

**5.** The electrolyte according to any one of claims 1 to 4, **characterized in that**, the electrolyte further comprises a first component, the first component comprises at least one of difluoroethylene carbonate, propylene carbonate, or ethylene carbonate; and
based on the mass of the electrolyte, a mass percentage of the first component is C, wherein $0.8 \leq C/(A+B) \leq 1.15$.

**6.** The electrolyte according to any one of claims 1 to 5, **characterized in that**, the electrolyte further comprises a second component, and the second component comprises at least one of diethyl carbonate, propyl propionate, or ethyl propionate; and
based on the mass of the electrolyte, a mass percentage of the second component is D, wherein $0.9 \leq D/(A+B) \leq 2$.

**7.** The electrolyte according to any one of claims 1 to 6, **characterized in that**, the electrolyte further comprises a nitrile compound, the nitrile compound comprises at least one of a dinitrile compound or a trinitrile compound; and
based on the mass of the electrolyte, a mass percentage of the nitrile compound is E, wherein $2\% \leq E \leq 10\%$.

**8.** The electrolyte according to claim 7, **characterized in that**,

the dinitrile compound comprises at least one of adiponitrile, succinonitrile, glutaronitrile, or 1,4-dicyano-2-butene; and
the trinitrile compound comprises at least one of 1,3,6-hexanetricarbonitrile or 1,3,5-pentanetricarbonitrile.

**9.** An electrochemical apparatus comprising the electrolyte according to any one of claims 1 to 8.

**10.** An electronic device comprising the electrochemical apparatus according to claim 9.

Europäisches Patentamt
European Patent Office
Office européen des brevets

# EUROPEAN SEARCH REPORT

Application Number
EP 25 19 9469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/244719 A1 (KIM JIN-SUNG [KR] ET AL) 3 November 2005 (2005-11-03)<br>* paragraphs [0003], [0011] - [0012], [0025] - [0027], [0034], [0043]; claims 1-22; examples 15,16; tables 1-4 *<br>----- | 1-10 | INV.<br>H01M10/0567 |
| A | WO 2019/117101 A1 (CENTRAL GLASS CO LTD [JP]) 20 June 2019 (2019-06-20)<br>* paragraphs [0036], [0084], [0111], [0113]; claims 1-35 *<br>----- | 1-10 | |
| A | US 2016/013517 A1 (NAKAZAWA EIJI [JP] ET AL) 14 January 2016 (2016-01-14)<br>* paragraph [0283]; claim 9; examples 2-10,4-10; tables 4,6 *<br>----- | 1-10 | |
| A | JP 6 957179 B2 (MITSUI CHEMICALS INC) 2 November 2021 (2021-11-02)<br>* paragraphs [0037], [0050]; claim 1 *<br>----- | 1-10 | |
| | | | TECHNICAL FIELDS SEARCHED (IPC) |
| | | | H01M |

The present search report has been drawn up for all claims

1

| Place of search | Date of completion of the search | Examiner |
|---|---|---|
| The Hague | 14 January 2026 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 19 9469

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | Publication date | Patent family member(s) | Publication date |
|---|---|---|---|
| US 2005244719 A1 | 03-11-2005 | CN 1385919 A | 18-12-2002 |
| | | JP 4448275 B2 | 07-04-2010 |
| | | JP 2002359001 A | 13-12-2002 |
| | | US 2002197537 A1 | 26-12-2002 |
| | | US 2005244719 A1 | 03-11-2005 |
| WO 2019117101 A1 | 20-06-2019 | NONE | |
| US 2016013517 A1 | 14-01-2016 | CN 105074994 A | 18-11-2015 |
| | | CN 109301162 A | 01-02-2019 |
| | | JP 6344381 B2 | 20-06-2018 |
| | | JP 6906476 B2 | 21-07-2021 |
| | | JP 7759434 B2 | 23-10-2025 |
| | | JP 2018125313 A | 09-08-2018 |
| | | JP 2020009784 A | 16-01-2020 |
| | | JP 2021106174 A | 26-07-2021 |
| | | JP 2022103379 A | 07-07-2022 |
| | | JP 2024113006 A | 21-08-2024 |
| | | JP WO2014157591 A1 | 16-02-2017 |
| | | KR 20150135278 A | 02-12-2015 |
| | | KR 20200138438 A | 09-12-2020 |
| | | US 2016013517 A1 | 14-01-2016 |
| | | WO 2014157591 A1 | 02-10-2014 |
| JP 6957179 B2 | 02-11-2021 | JP 6957179 B2 | 02-11-2021 |
| | | JP 2018170238 A | 01-11-2018 |

EPO FORM P0459

For more details about this annex : see Official Journal of the European Patent Office, No. 12/82